# EUROPEAN PATENT APPLICATION

(11) **EP 3 301 943 A1**
(43) Date of publication of application: **04.04.2018**
(21) Application number: 16306246.6
(22) Date of filing: 28.09.2016
(51) Int. Cl.: H04N 21/442, H04N 21/658

(54) **SET TOP BOX CONNECTION HISTORY AS A PIRACY DETECTOR**

(71) Applicant: Thomson Licensing, 92130 Issy-les-Moulineaux (FR)
(72) Inventor: MAY, Martin, 35576 CESSON-SEVIGNE (FR); VIGOUROUX, Jean-Ronan, 35576 CESSON-SEVIGNE (FR); LE BOLZER, Françoise, 35576 CESSON-SEVIGNE (FR); JEANNE, Ludovic, 35576 CESSON-SEVIGNE (FR)
(74) Representative: Huchet, Anne

(57) **Abstract**

A method and apparatus are described including reading (310) display device identification data of a receiver device, determining (315) if the display identification data is equal to an immediately previously recorded display identification data, incrementing (325) a second counter if the display identification data is not equal to the immediately previously recorded display identification data, determining (335) if the second counter exceeds a threshold and performing (340) an anti-piracy action if the second counter exceeds the threshold.

## Description

### FIELD

The proposed method and apparatus relates to piracy detection using connection history of a device such as a set top box (STB).

### BACKGROUND

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Some PayTV operators forbid to their customers from moving the STB to another location (premises, residence (for example, the neighbors)). Because the TV signal is broadcast or multicast, it is often impossible to detect if an STB is shared between several people living in different residences (houses, apartments, premises). The service provider is interested in protecting its assets and the STB is usually owned by the service provider and leased to a subscriber. TVs are usually owned by the subscriber who does not care where or how it is connected as long as it operates.

### SUMMARY

The proposed method and apparatus provides a way to detect at the receiver e.g. level that the customers do not use a service such as, for example PayTV in a legacy context. Legacy context as used herein means currently deployed devices, which may have restrictions or limitations such as not having newer features such as GPS. The STB of the proposed method and apparatus does not require Internet access to perform the detection. But it requires an Internet access to publish the information that there is a high probability that the subscriber is pirating services.

Each time the link (e.g., high-definition multimedia interface (HDMI)) between the TV and the STB) is turned on (established), the STB detects if the TV is different, and stores the number of times that the same TV has been used. The STB stores its connection history regarding the TV to which it is connected in its memory. Memory may be random access memory (RAM), dynamic RAM (DRAM), static RAM (SRAM), synchronized dynamic RAM (SDRAM), read-only memory (ROM), FLASH, disk or any other form of memory or storage. In the case of frequent changes in the TV to which the STB is connected, there is a risk of piracy.

In addition, and if connected to a network (e.g., LAN, WAN, MAN etc.) the STB can record several network parameters that provide information about the used network such as the MAC address of the gateway, the public IP address of the subscriber network interface.

The STB can react in several different ways. If a network connection is available, the STB can send the PayTV operator the subscriber identification information. Alternatively, the STB may refuse to display the video if the STB is not connected to the main TV (the one that has had the greater number of connections). The STB may alternatively display a warning message to the subscriber or the STB may stop working and request external technician intervention.

A method and apparatus are described including reading display device identification data of a receiver device, determining if the display identification data is equal to an immediately previously recorded display identification data, incrementing a second counter if the display identification data is not equal to the immediately previously recorded display identification data, determining if the second counter exceeds a threshold and performing an anti-piracy action if the second counter exceeds the threshold.

In another embodiment if the display identification data is equal to the immediately previously recorded display identification data then the first counter is incremented.

In another embodiment the anti-piracy action is one of notifying a content service provider if a network connection is available or displaying a warning to a subscriber or stop operating.

In another embodiment stop operating includes requesting service technician intervention or ceasing to forward content to the receiver device.

In another embodiment the display device identification data is extended display device identification data.

In another embodiment the first counter, the second counter and the display device identification data are stored.

In another embodiment a date of detection of different display device identification data is stored, if available.

In another embodiment a number of hours the receiver device was connected prior to detecting the different display device identification data is stored.

In another embodiment localization information is stored, if available.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is an exemplary block diagram including a STB and TV and the communications link therebetween.
Fig. 2 is an exemplary cable connector such as an HDMI connector.
Fig. 3 is a flowchart of an exemplary embodiment of the proposed method to detect piracy using the TV connection history.
Fig. 4 is a block diagram of a home networking device such as a set top box.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The proposed method and apparatus will be described in terms of a HDMI interface but the link between the STB and the TV may be any link that includes access to a unique display device identifier.

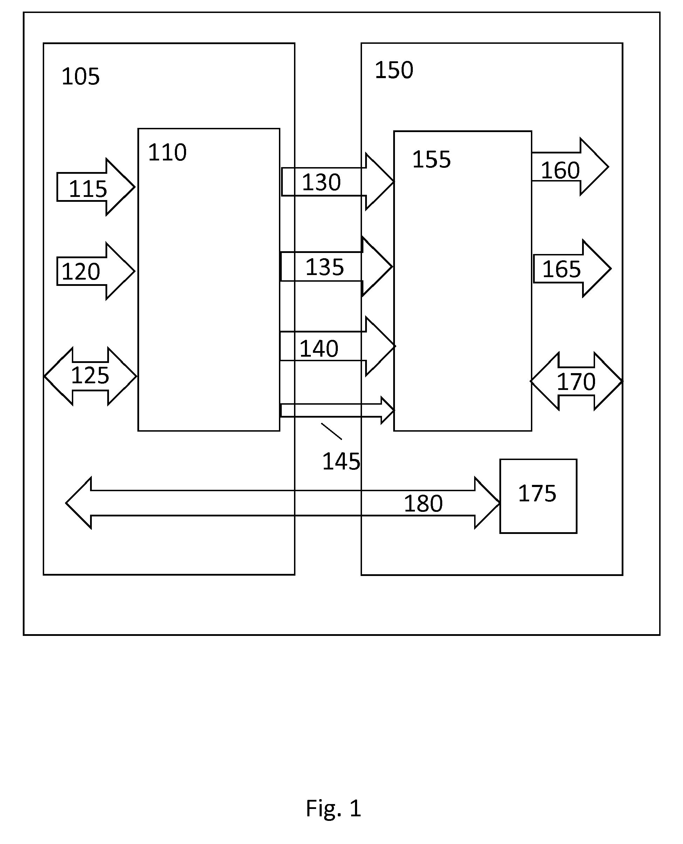

Fig. 1 is an exemplary block diagram including a STB and TV and the communications link therebetween. A source component (device) 105 is in communication with a receiver component (device) 150. The source component (device) 105 can be a STB and the receiver component (device) 150 is a TV or any other device capable of receiving and displaying audio, video and/or multimedia content. The transmitter portion 110 of the source component (device) 105 receives a video signal 115 from a service provider (e.g., PayTV). The video signal 115 has video content to be provided to the receiver component (device) 150. The transmitter portion 110 of the source component (device) 105 also receives an audio signal 120 from the service provider. The audio signal has audio content to be provided to the receiver component (device) 150. The transmitter portion 110 of the source component (device) 105 also sends and receives control/status signals to and from the service provider.

The receiver component (device) 150 receives the audio and video signals as well as a clock signal from the source component (device) 105. In an exemplary embodiment, the audio, video and clock signals may be distributed to the receiver component (device) 150 using transition-minimized differential signals (TMDS), which is a technology for transmitting high speed serial data used by video interfaces, such as the digital visual interface (DVI) and the high definition multimedia interface (HDMI). In the exemplary embodiment, the receiver component (device) 150 receives TMDS channel 0 (130), TNDS channel 1 (135), TMDS channel 2 (140) and TMDS clock channel (145) from the transmitter 110 of the source component (device) 105.

The receiver portion 155 of the receiver component (device) provides a video signal 160, the audio signal 165 to the display portion of the display device (e.g. TV). The receiver portion 155 of the receiver component (device) 150 also sends and receives control/status signals to and from the display of the TV. The display data channel (DDC) 180 exchanges clock and data between a display device identification module 175. The receiver component (device) 150 may provide extended display identification data such as used by an HDMI. The display data channel uses pins 15 and 16 of an HDMI cable connector.

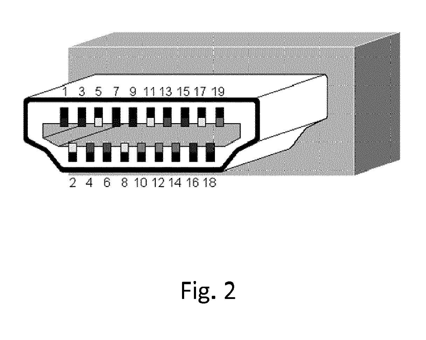

Fig. 2 is an exemplary cable connector such as an HDMI connector. The clock is on pin 15 of an HDMI cable connector and data is on pin 16 of an HDMI cable connector.

The display device identification data is an important piece of information that is in the sink (receiver component, TV) and is read by the source component (device) (STB). The display device identification data is provided by a receiver device (display device (e.g., TV)) to describe its capabilities to the source (e.g., STB). Display device identification data includes a manufacturer identification, a product identification code, a serial number and a date of manufacture. The display device identification data is constant so it is easy for the source component (device) (STB) to record information about the TV (receiver component (device)) to which it is connected.

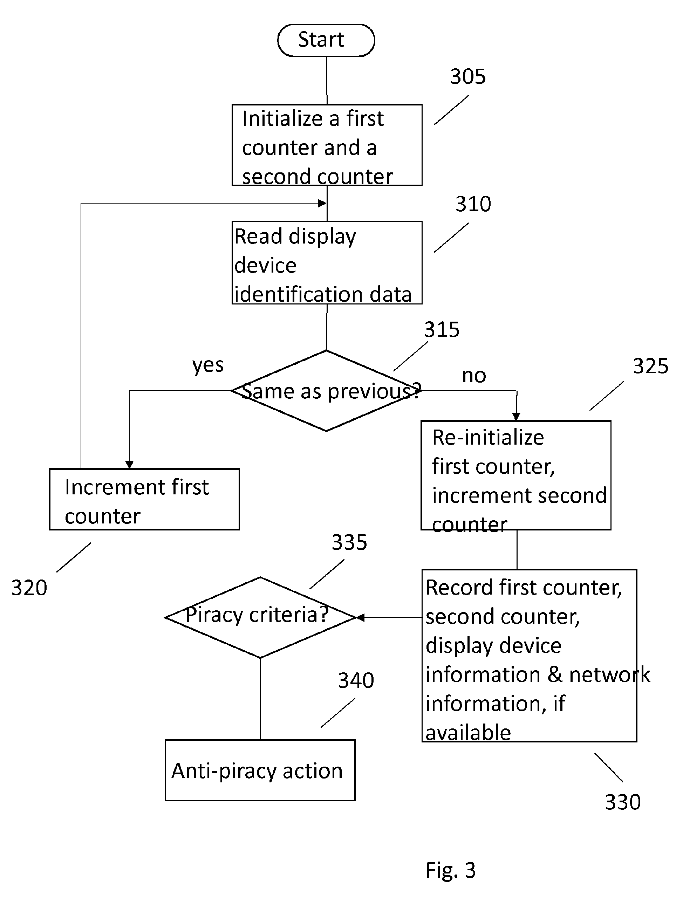

Fig. 3 is a flowchart of an exemplary embodiment of the proposed method to detect piracy using the display device (TV, receiver device) connection history. When the source component (device) (STB) is turned on (started up) when service in initiated, the first and second counters are initialized at 305. The STB then reads the display device identification data at 310. The display device identification data is compared to the previously read display device identification data at 315. If the display device identification data is the same as the previously read display device identification data, then at 320 the first counter is incremented and control proceeds to 310. On the other hand, if the display device identification data is not the same as the previously read display device identification data then at 325 the first counter is re-initialized and the second counter is incremented. The second counter records the number of times the TV connection is changed based on the display device identification data. At 325, if available the date of the detection of the new receiver device (TV) connection (new display device identification data) is recorded (stored). Also recorded (stored), if available, is the total number of hours the STB was used with the receiver device (TV) prior to detecting a receiver device (TV) connection change. A receiver device (TV) connection change occurs when the STB detects a different display identification data.

At 330 the network information is read (e.g., MAC address of gateway, subscriber's IP address) if it is available (if the STB is connected to a network). At 330, the first counter, the second counter and the display device identification data are recorded (stored). If the localization information (network address (e.g., MAC address, IP address, any GPS data)) is available, it is recorded (stored) at this time as well. At 335 a test is performed to determine if piracy criteria is met. If the subscriber has recently purchased a new TV and the display identification data is new (different), for example, then the second counter would be incremented. Subscribers do not usually buy new TVs every day or even every few days. So if the second counter is incremented once in, for example, two or three years then a threshold of new (different) TV (receiver device, display device) connections would not have been met. That is, if the second counter reaches a threshold set by the service provider then the piracy criteria is met because the TV (receiver device, display device) connection history would indicate that there is a significant likelihood that the subscriber is lending out the STB. The piracy criteria is then based on the TV (receiver device, display device) connection history and how often the TV (receiver device, display device) connection to the STB changes over time. If the piracy criteria is met then at 340 the STB takes anti-piracy action such as described elsewhere herein.

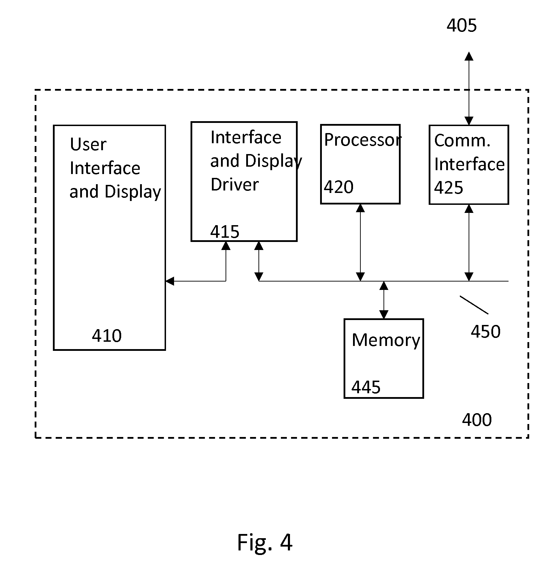

Fig. 4 is an example block diagram of an exemplary home networking device (media device) 400 such as, but not limited to, a set top box. The block diagram configuration includes a bus-oriented 450 configuration interconnecting a processor 420, and a memory 445. The configuration of Fig. 4 also includes a communication interface 425. The communication interface 425 may be wired or wireless and may in fact, include two interfaces - one for wired line communication and one for wireless communication.

Processor 420 provides computation functions for set top box, such as those depicted in Fig. 3 as well as conventional set top box functionality. The processor 420 can be any form of CPU or controller that utilizes communications between elements of the set top box to control communication and computation processes. Those of skill in the art recognize that bus 450 provides a communication path between the various elements of home networking device 400 and that other point-to-point interconnection options (e.g. non-bus architecture) are also feasible.

User interface and display 410 is driven by interface and display driver circuit 415. The interface 410 is used as a multimedia interface having both audio and video capability to display streamed or downloaded audio and/or video and/or multimedia content obtained via network interface 425 and connection 405 to a network.

Memory 445 can act as a repository for memory related to any of the methods that incorporate the functionality of the set top box. Memory 445 can provide the repository for storage of information such as program memory, downloads, uploads, anti-piracy counters, display device identification data or scratchpad calculations as well as the storage of streamed or downloaded content including audio, video and multimedia content. Those of skill in the art will recognize that memory 445 may be incorporated all or in part of processor 420. Communication interface 425 has both receiver and transmitter elements for communication as known to those of skill in the art.

Communication interface 425 may function to read display device identification data of a receiver device (component, TV, display device). Processor 420 may function to determine if the display identification data is equal to an immediately previously recorded display identification data. Program instructions for operation of the processor of the set top box may be in memory 445 or may be in processor. Additionally, the display device identification data may be stored in memory 445 or recorded in processor 420. Processor 420 also may function to increment a second counter if the display identification data is not equal to the immediately previously read display identification data. Processor 420 may also function to determine if the second counter exceeds a threshold and perform an anti-piracy action if the second counter exceeds the threshold.

Processor 420 may also function to increment a first counter if the display identification data is equal to the immediately previously recorded display identification data. Anti-piracy action is preferably at least one of notifying a content service provider if a network connection is available or displaying a warning to a subscriber or stop operating. Displaying a warning to a subscriber may be accomplished by displaying a warning message on the set top box through the user interface and display 410, which is driven by interface circuit 415 or transmitting a message to the receiver device through communications interface 425. Stop operating includes requesting service technician intervention or ceasing to forward content to said receiver device. Again messages to that effect may be displayed on the set top box through the user interface and display 410, which is driven by interface circuit 415 or transmitting a message to the receiver device through communications interface 425.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "at least one of A, B and C," the phrase means "only A, or only B, or only C, or any combination of A, B and C."

## Claims

1. A method, comprising:
reading (310) display device identification data of a receiver device;
determining (315) if said display identification data is equal to an immediately previously recorded display identification data;
incrementing (325) a second counter if said display identification data is not equal to said immediately previously recorded display identification data;
determining (335) if said second counter exceeds a threshold; and
performing (340) an anti-piracy action if said second counter exceeds said threshold.

2. The method according to claim 1, further comprising incrementing (320) a first counter if said display identification data is equal to said immediately previously recorded display identification data.

3. The method according to claims 1 or 2, wherein said anti-piracy action is one of notifying a content service provider if a network connection is available or displaying a warning to a subscriber or stop operating.

4. The method according to claim 3, wherein stop operating includes requesting service technician intervention or ceasing to forward content to said receiver device.

5. The method according to any of said preceding claims, wherein said display device identification data is extended display device identification data.

6. The method according to any of said preceding claims, further comprising storing (330) said first counter, said second counter and said display device identification data.

7. The method according to any of the preceding claims, further comprising storing (325) a date of detection of different display device identification data, if available.

8. The method according to any of the preceding claims, further comprising storing (325) a number of hours said receiver device was connected prior to detecting said different display device identification data.

9. The method according to any of the preceding claims, further comprising storing (330) localization information, if available.

10. An apparatus comprising one or more processors (420) operable to:
read (310) display device identification data of a receiver device;
determine (315) if said display identification data is equal to an immediately previously recorded display identification data;
increment (325) a second counter if said display identification data is not equal to said immediately previously recorded display identification data;
determine (335) if said second counter exceeds a threshold; and
cause (340) an anti-piracy action to be performed if said second counter exceeds said threshold.

11. An apparatus according to claim 10 wherein the processor is operable to increment (320) a first counter if said display identification data is equal to said immediately previously recorded display identification data.

12. The apparatus according to claim 10 or 11, wherein said anti-piracy action caused by said processor comprises one or more of notifying a content service provider if a network connection is available, displaying a warning to a subscriber and stopping operating.

13. The apparatus according to any one of claims 10 to 12 further configured to implement the method of any one of claims 4 to 9.

14. A set top box comprising the apparatus of any one of claims 10 to 13.

15. A computer program product for a programmable apparatus, the computer program product comprising a sequence of instructions for implementing a method according to any one of claims 1 to 9 when loaded into and executed by the programmable apparatus.
